(19) Europäisches Patentamt
European Patent Office
Office européen des brevets

(11) **EP 1 166 420 B1**

(12) **EUROPÄISCHE PATENTSCHRIFT**

(45) Veröffentlichungstag und Bekanntmachung des Hinweises auf die Patenterteilung:
**07.05.2003 Patentblatt 2003/19**

(21) Anmeldenummer: **00925149.7**

(22) Anmeldetag: **31.03.2000**

(51) Int Cl.7: **H02H 9/02**

(86) Internationale Anmeldenummer:
**PCT/EP00/02889**

(87) Internationale Veröffentlichungsnummer:
**WO 00/062394 (19.10.2000 Gazette 2000/42)**

(54) **SICHERHEITSBARRIERE ZUM BEGRENZEN VON STROM UND SPANNUNG**

SAFETY BARRIER FOR LIMITING CURRENT AND VOLTAGE

BARRIERE DE SECURITE DESTINEE LIMITER LE COURANT ET LA TENSION

(84) Benannte Vertragsstaaten:
**AT BE CH CY DE DK ES FI FR GB GR IE IT LI LU MC NL PT SE**

(30) Priorität: **31.03.1999 DE 19914549**
**31.05.1999 DE 19924746**
**08.07.1999 DE 19931721**

(43) Veröffentlichungstag der Anmeldung:
**02.01.2002 Patentblatt 2002/01**

(73) Patentinhaber: **Pepperl + Fuchs Gmbh**
**68307 Mannheim (DE)**

(72) Erfinder: **FEY, Wilhelm**
**D-67246 Dirmstein (DE)**

(74) Vertreter: **Mierswa, Klaus, Dipl.-Ing.**
**Friedrichstrasse 171**
**68199 Mannheim (DE)**

(56) Entgegenhaltungen:
**WO-A-92/02066      DE-C- 3 804 250**
**US-A- 3 818 273**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Technisches Gebiet:

Die Erfindung betrifft eine Sicherheitsbarriere zum Begrenzen von Strom und Spannung eines der Sicherheitsbarriere nachgeschalteten elektrischen Verbrauchers, zum Beispiel Meßwertgeber, mit mindestens einem Eingangsanschluß und einem Ausgangsanschluß sowie Eingangs- und Ausgangsanschluß einer gemeinsamen Leitung, beispielsweise Masseleitung, wobei die Sicherheitseinrichtung wenigstens eine Spannungs- und Strombegrenzungseinrichtung, wie Zenerbarriere, aufweist, umfassend wenigstens eine Schutzeinrichtung, wie Schmelzsicherung, eine auf die gemeinsame Leitung bezogene Spannungsbegrenzungseinrichtung, eine mit dem Ausgang derselben verbundene Strombegrenzungseinrichtung sowie eine weitere Schutzschaltung, welche vor der Spannungs- und Strombegrenzungseinrichtung angeordnet ist, gemäß dem Oberbegriff des Anspruchs 1.

Stand der Technik:

Viele elektrische Geräte oder Verbraucher müssen zur Vermeidung von Ausfällen, die zu Schäden führen können, gegen zu hohe Spannungen oder Ströme geschützt werden. Insbesondere sind derartige Schutzbeschaltungen in explosionsgefährdeten Bereichen notwendig.

Durch die EP 0 359 912 A1 ist eine Schaltungsanordnung für eine Sicherheitsbarriere gemäß der eingangs genannten Gattung zum Begrenzen von Strom und Spannung an einer in einen explosionsgefährdeten Bereich laufenden Zweidrahtleitung mit zwei Sicherungen bekannt geworden, mit einem zwei Eingangsanschlüsse aufweisenden Eingang, an dem eine Spannungsquelle anschließbar ist und einem zwei Ausgangsanschlüsse aufweisenden Ausgang, der mit der Zweidrahtleitung verbunden ist. An die Eingangsanschlüsse ist eine erste Spannungsbegrenzungsschaltung angeschlossen, welche eine erste Sicherung und eine erste Spannungsbegrenzungseinrichtung aufweist. Der Ausgang der Spannungsbegrenzungsschaltung ist mit einer Strombegrenzungsschaltung verbunden, wobei zumindest einige Teile der Schaltungsanordnung ein-schließlich der Sicherung unzugänglich in einem Gehäuse gekapselt sind. Zwischen dem Eingang und der ersten Spannungsbegrenzungsschaltung liegt eine Schaltung aus einer zweiten Sicherung und einer zweiten Spannungsbegrenzungseinrichtung, die eine einer Zenerdiode ähnliche Charakteristik aufweist. Die erste Spannungsbegrenzungsschaltung ist eingangsseitig parallel zu der zweiten Spannungsbegrenzungseinrichtung geschaltet und über die zweite Sicherung mit dem Eingang verbunden, wobei zumindest die zweite Sicherung manuell zugänglich ist. Somit kann auch im Kurzschlußfall bei der Sicherheitseinrichtung die zugängliche Sicherung ausgetauscht werden. Nachteilig ist die Verwendung von zwei Sicherungen, von denen die eine beim Ansprechen der Sicherheitseinrichtung durchbrennt und manuell ausgewechselt werden muß. Ein selbstständiges Wiedereinschalten der Schaltungsanordnung ist nicht möglich.

Aus der DE-PS 36 22 268 (US-PS 4,831,484) ist eine Sicherheitsbarriere mit einem zwei Anschlüsse aufweisenden Barriereneingang, einem zwei Anschlüsse aufweisenden Barrierenausgang und einem in einer Verbindung zwischen dem Barriereneingang und dem -ausgang liegenden elektronischen Längssteuerglied mit einem Steuereingang bekannt geworden, wobei das Längssteuerglied ein Transistor sein kann. Eine am Eingang vorgesehene Sicherung in Verbindung mit spannungsbegrenzenden Zenerdioden dient dazu, die Ausgangsspannung dann abzuschalten, wenn die Spannung am Eingang der Sicherheitsbarriere die Sperrspannung der Zenerdioden überschreitet. Ansonsten würde ein Stromanstieg die Folge sein, der über dem Strom liegen würde, den die Sicherheitsbarriere bei maximal zulässiger Eingangsspannung an ihrem Ausgang zum Verbraucher abgeben darf. In diesem Fall löst die Sicherung aus und schaltet die Ausgangsspannung ab. Der im Kurzschlußfall auftretende maximale Ausgangsstrom liegt normalerweise unter dem Auslösestrom der Schmelzsicherung, so dass sie in diesem Fall normalerweise nicht anspricht. Liegt allerdings der maximale Ausgangsstrom oberhalb des Auslösestroms der Schmelzsicherung, so brennen irreparabel Bauelemente der Sicherheitsbarriere durch, so dass die nicht austauschbare Sicherung ihren Zweck nicht erfüllen kann.

Durch die EP 0 310 280 B1 ist eine Shuntdioden-Sicherheitsbarriere zum Anschluß an eine Spannungsversorgung bekannt geworden, mit einem Shuntdiodenmittel, einem Schmelzbauteil auf der Spannungsversorgungsseite der Shuntdiodenmittel, einem in Reihe mit dem Schmelzbauteil angeschlossenen und zur Schaltung in Reihe mit einer Last angeordneten Strombegrenzerkreis und mit Wärmeschutzmittel, um eine Überhitzung der Barrierebauteile zu verhindern, wenn eine übermäßige Spannung angelegt wird. Der Strombegrenzerkreis ist in Reihe zwischen dem Schmelzbauteil und dem Shuntdiodenmittel geschaltet und so angeordnet, dass das Schmelzbauteil gegen angelegte Spannungen größer als die normale maximale Arbeitsspannung geschützt ist. Das Wärmeschutzmittel innerhalb der Sicherheitsbarriere umfaßt eine Zenerdiode, die zwischen dem Schmelzbauteil und dem Strombegrenzerkreis angeschlossen ist. Diese Schaltung hat den Nachteil, dass sie einen hohen Querstrom und damit eine hohe Verlustleistung aufweist. Außerdem besitzt diese Schaltungsart einen erheblichen Längsspannungsabfall.

Durch die US-A-3 818 273 ist eine Sicherheitsbarriere mit zwei Transistoren zum Begrenzen von Strom und Spannung eines der Sicherheitsbarriere nachgeschalteten elektrischen Verbrauchers mit mindestens einem Eingangsanschluß und einem Ausgangsanschluß bekannt geworden, wobei die Sicherheitsbarriere wenigstens eine Spannungs- und Strombegrenzungseinrichtung, wie Zenerbarriere, sowie eine mit dem Ausgang derselben verbundene Strombegrenzungseinrichtung aufweist. Zur Spannungsdetektion ist zwischen der Basis des zweiten Transistors und einer gemeinsamen Leitung eine Spannungsfühlerschaltung vorgesehen. Nachteilig ist, daß die Schaltung, welche für einige 10V ausgelegt ist, einen erheblichen Querstrom aufweist, weil am Eingang der Schaltung ein Spannungsteiler aus zwei Widerständen angeordnet ist, zwischen denen über eine Diode die Basis des ersten Transistors angeschlossen ist. Über diesen Spannungsteiler fließt ein dauernder Querstrom.

Durch die WO 92/02066 ist eine Zweidraht-Einrichtung zum Schutz einer dieser Einrichtung nachgeschalteten Prozeßkontrolleinrichtung bekannt geworden, wobei die Einrichtung einen Stromkreis zum Schutz gegen Überströme oder Rückströme aufweist. Hierzu besitzt die Einrichtung zwei Stromfühlsensoren, welche Schaltkreise mit variablen Impedanzen ansteuern, die ihrerseits die Ausgangsströme begrenzen, welche danach der Prozeßkontrolleinrichtung zugeführt werden.

Durch die DE 38 01 250 ist schließlich eine Schaltungsanordnung für eine Strombegrenzung zum Vorschalten vor über die Teilnehmerleitung gespeisten digitalen Fernsprechendgeräten bekannt geworden. In einem Längszweig der Schaltungsanordnung ist ein Feldeffekttransistor angeordnet, dessen Durchgang über sein Gate in Abhängigkeit sowohl der von der anliegenden Speisespannung abhängigen Durchsteuerung eines Transistors als auch von der Ladung eines Kondensators gesteuert wird.

Technische Aufgabe:

Der Erfindung liegt die Aufgabe zugrunde, eine Sicherheitsbarriere der genannten Gattung zum Schutz einer Spannungs- und Strombegrenzungseinrichtung, wie Zenerbarriere oder einer anderen zu schützenden Schaltung zu schaffen, wobei die Sicherheitsbarriere bei Überspannung die Spannungs- und Strombegrenzungseinrichtung vor Zerstörung schützen soll, wobei die Sicherheitsbarriere insbesondere auch eine geringe Verlustleistung aufweisen soll, wobei Spannungsverluste wie auch Querströme nur gering sein sollen.

Offenbarung der Erfindung und deren Vorteile:

Diese Aufgabe wird gelöst durch eine Sicherheitsbarriere nach Anspruch 1.

Die erfindungsgemäße Sicherheitsbarriere dient vorteilhaft zur Überspannungsabschaltung bzw. -begrenzung als auch zur Überstromabschaltung bzw. -begrenzung. Vorteilhaft kommt die Schutzschaltung ohne eine auswechselbare Sicherung aus. Somit ist gewährleistet, dass die unzugängliche Sicherung der Spannungs- und Strombegrenzungseinrichtung, die eine Zenerbarriere beinhalten kann, bei Auftreten einer Überspannung nicht zerstört wird. Damit können vorteilhaft sowohl die Ex-Anforderungen einer Sicherheitsbarriere als auch die Anforderungen einer bedienungsfreien elektronischen Sicherung kombiniert werden.

Insbesondere weist die Sicherheitsbarriere eine geringe Verlustleistung auf, da sie nahezu keinen Querstrom im Bereich der Betriebsspannung und nur einen sehr geringen Spannungsabfall über dem Schalt- und/oder Regeltransistor, also Längsspannungsabfall, besitzt. Ebenso weist die Sicherheitsbarriere eine geringe Verlustleistung in ihrem abschaltenden Zustand und gegebenenfalls rückgeregelten Zustand auf. Die Sicherheitsbarriere ist mit diskreten Bauelementen preislich günstig herzustellen. Weitere vorteilhafte Ausgestaltungen ergeben sich aus den Unteransprüchen.

Es sind vorteilhaft drei eng miteinander verwandte Grundschaltungen der weiteren Schutzschaltung der Sicherheitsbarriere gegeben. Entweder ist zur Stromerfassung zwischen dem Eingangsanschluß und der Source des Schalt- und/oder Regeltransistor ein Längswiderstand als Stromfühler angeordnet. Die Einleitung der Abschaltung oder Regelung wird über die Widerstände R1 bis R3 ausgelöst und erfolgt durch den Laststrom im Leitungspunkt 9, welcher in die Spannungs- und Strombegrenzungseinrichtung fließt. Diese Schaltung ist dort zweckmäßigerweise anzuwenden, wo zu hohe Lastströme vermieden werden sollen.

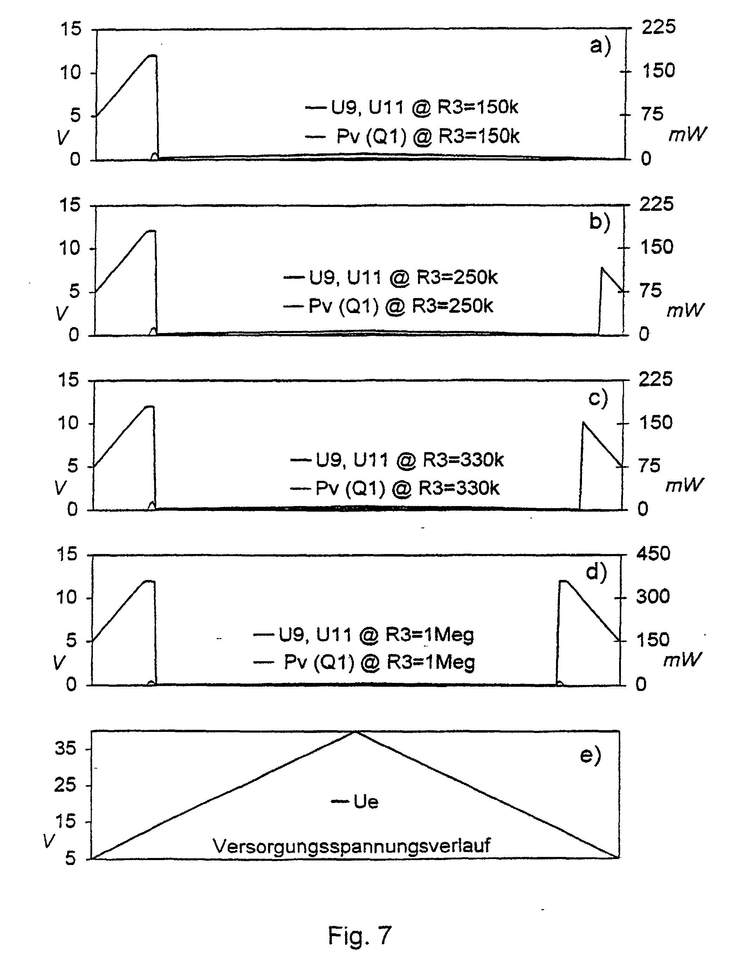

Oder zwischen der Basis des zweiten Transistors und der gemeinsamen Leitung ist zur Spannungsdetektion eine Spannungsfühlerschaltung unter Weglassung des stromfühlenden Längswiderstandes angeordnet. Diese Schaltung ohne stromfühlenden Längswiderstand dient hauptsächlich der Überspannungsabschaltung bzw. Überspannungsbegrenzung. Die Einleitung der Abschaltung oder Regelung wird über den Widerstand R5 und die Diode D1 ausgelöst und erfolgt über die Eingangsspannung UE. Der Hauptvorteil dieser Schaltung liegt darin, daß der Spannungsabfall der Schutzschaltung extrem klein gehalten werden kann, was kleine Verlustleistungen bedingt (s. Figur 7).

Falls die Schutzschaltung gleichzeitig sowohl zur Spannungs- als auch zur Strombegrenzung dienen soll, sind sowohl der Längswiderstand R1 als Stromfühler als auch die Spannungsfühlerschaltung als Spannungsdetektor vorhanden, so dass vorteilhaft Überspannungsabschaltung bzw. -begrenzung und Überstromabschaltung bzw. -begrenzung kombiniert sind.

In der Spannungsfühlerschaltung kann eine Zener- oder Diacdiode als Spannungsdetektor dienen, der ein Widerstand R5 in Reihe geschaltet ist. Sofern abschaltende Eigenschaften dieser weiteren Schutzschaltung erwünscht sind, ist zur Verringerung des dann erforderlichen Rückkopplungsstromes zwischen die Basis des Transistors Q2 und Source des Schalt- und/oder Regeltransistor Q1 ein Widerstand R2 gelegt. Die Größe dieses Widerstandes bestimmt den erforderlichen Rückkopplungsstrom. Der Wert des Widerstandes R2 kann zwischen Null bis ∞ liegen.

Zur Einstellung des Rückkoppelstromes unabhängig von der Ausgangs- bzw. Versorgungsspannung kann der Rückkopplungswiderstand durch eine Steuer- oder Regelschaltung ersetzt sein, die zum Beispiel eine Konstantstromschaltung sein kann, um den maximalen Rückkoppelstrom unabhängig von der Ausgangsspannung bzw. Versorgungsspannung einstellen zu können.

In höchst vorteilhafter Ausgestaltung der Sicherheitsbarriere wird der Rückkopplungstrom mittels des Rückkopplungswiderstandes oder der Steuer- oder Regelschaltung so eingestellt, dass sich bei Überlast ein Abregeln des Laststromes auf einen minimalen Wert ergibt und erst beim Anlegen einer Spannung größer als die Eingangsnennspannung ein Abschalten des Stromes in die Spannungs- und Strombegrenzungseinrichtung erfolgt und ein selbstständiges Wiedereinschalten beim anschliessenden Absenken der Versorgungsspannung auf Eingangsnennspannung gegeben ist. Dadurch ist der Vorteil gegeben, dass die Sicherheitsbarriere nach ihrem Ansprechen bzw. nach dem Abschalten der Last selbstständig wieder einzuschalten imstande ist, sobald die Überspannung bzw. der Überstrom auf die Eingangsnominalspannung bzw. den Nominalstrom zurückgegangen ist.

Zur Verringerung des Rückkopplungsstromes in der weiteren Schutzschaltung kann ein Widerstand zwischen die Basis des Transistors Q2 und Source des Schalt- und/oder Regeltransistors Q1 gelegt sein.

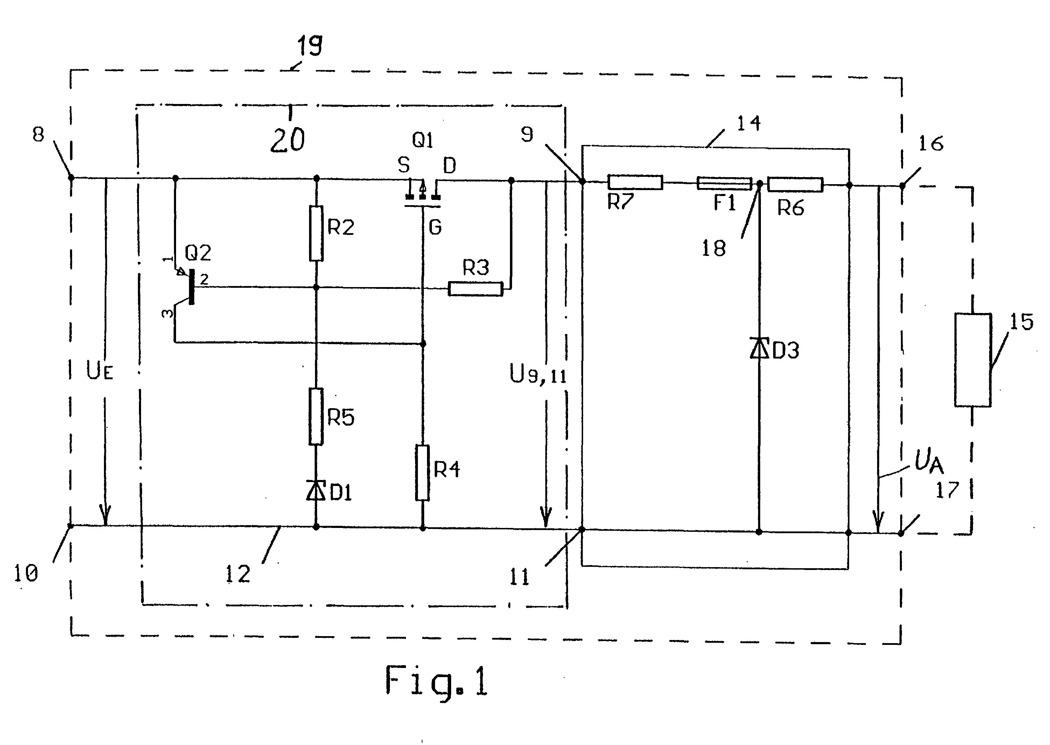

Die Rückkopplungsspannung des Rückkopplungswiderstandes kann sowohl direkt nach dem Drain des Schalt- und/oder Regeltransistors als auch an jedem beliebigen Schaltungspunkt des Stromweges zwischen den Leitungspunkten 9 und 16 (Figur 1) abgreifbar und auf die Basis des zweiten Transistors rückgekoppelt sein.

Die Sicherheitsbarriere kann zum Beispiel einen Rückkopplungswiderstand solcher Größe aufweisen, dass sich beim Betrieb mit Nennspannung ein auf einen Bruchteil des zu begrenzenden Laststromes abgeregelter Rücklaufstrom ergibt. Bei Eingangsnennspannung und auftretendem Überstrom schaltet die Sicherheitsbarriere dann nicht ab; bei Vorhandensein einer Überspannung erhöht sich der Rückkoppelstrom um das Verhältnis von Eingangsspannung zu Eingangsnominalspannung $U_E:U_{ENOM}$. Nunmehr wird die Spannung $U_{9-11}$ der Sicherheitsbarriere oder des zu schützenden elektrischen Gerätes abgeschaltet bzw. abgetrennt. Verringert sich die Eingangsspannung $U_E$ der Sicherheitsbarriere auf ihren Eingangsnominalwert $U_{ENOM}$, schaltet die Sicherheitsbarriere ohne weiteres Zutun wieder selbsttätig ein bzw. nimmt den Zustand mit abgeregeltem Rücklaufstrom an, womit sich ein selbständiges Anpassen an die Versorgungsbedingungen ergibt.

Somit ist es möglich, die Sicherheitsbarriere an Netzen zu betreiben, die zeitweilige Überspannungen aufweisen, wobei dann, solange die Überspannung anhält, die angeschlossene zu schützende Schaltung vor dieser Überspannung geschützt wird, ohne dass ein Reset erforderlich ist. Dadurch wird ein Einsatz von empfindlichen Geräten in Verbindung mit der erfindungsgemäßen Sicherheitsbarriere in stark instabilen Netzen möglich.

Ebenso können mittels des Rückkopplungswiderstandes oder mit der Steueroder Regelschaltung bestimmte Eigenschaften der Überstrom- oder Überspannungsbegrenzung eingestellt werden. Dadurch kann eine entsprechende Auswerteelektronik vorgewählte Abregelkennlinien oder Abschaltkennlinien erzeugen, wodurch zum Beispiel eine Abschaltverzögerung programmiert werden kann. Eine Verschachtelung von Zenerbarrieren und derartiger Begrenzerschaltung ist ebenfalls möglich.

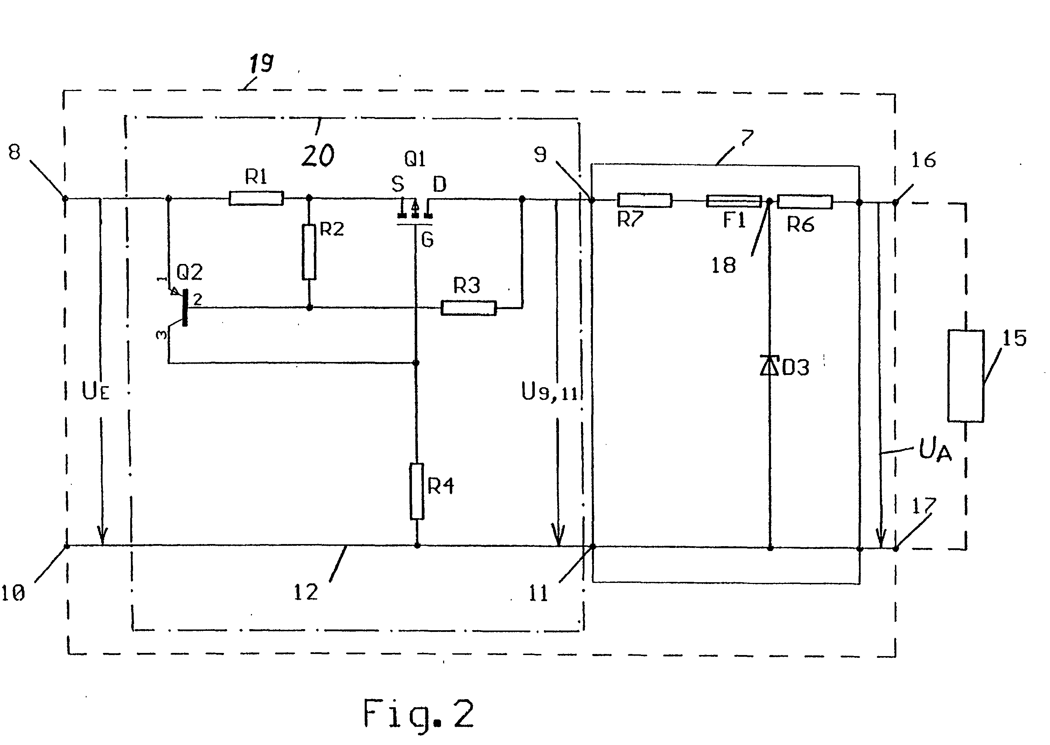

Eine zu schützende Elektronik hat im Regelfall einen festen Stromaufnahmebereich und braucht nicht zusätzlich gegen Überstrom geschützt zu werden. Hier bietet sich die Schaltung mit Spannungsdetektor an (Figur 1). Bei offenen Verbindungen zwischen Sicherheitsbarriere bzw. Schutzschaltung und zu schützender Elektronik bzw. Last ist ein Kurzschluß auf den Verbindungsleitungen möglich. Hier gelangt zweckmäßig die Schaltung mit Stromfühler und Überstrombegrenzung (Figur 2) zum Einsatz.

Wenn in Anwendungen Eingangsspannungen abzuschalten sind, die größer als die zulässige Spannung zwischen Gate und Source des Schaltund/oder Regeltransistor sind, so ist parallel zu Gate und Source des Schaltund/oder Regeltransistor zwischen Gate und Source desselben eine Zenerdiode zum Schutz der Gate-Source-Strecke gelegt. Oder zur Verringerung der Gate-Ansteuerspannung ist eine Zenerdiode in Reihe mit dem Widerstand R4 geschaltet. Je nach ausgewähltem Feldeffekttransistor schützen diese Zenerdioden vor zu großen Steuerspannungen am Gate. Die Zenerdioden können auch integraler Bestandteil des Schalt- und/oder Regeltransistor sein.

Die Sicherheitsbarriere bzw. Schutzschaltung kann eine Reset-Einrichtung, wie Taste, zum Wiedereinschalten der weiteren Schutzschaltung aufweisen, falls die Spannungs- und Strombegrenzungseinrichtung auslösen sollte. Das kann insbesondere dann von Vorteil sein, wenn die Rückkopplung so eingestellt ist, dass die Schutzschaltung beim Ansprechen die nachfolgende zu schützende Schaltung bzw. Last von der Versorgungsspannung bleibend trennt.

Des Weiteren kann in der Sicherheitsbarriere bzw. Schutzschaltung statt des Feldeffekttransssistors als Schalt- und/oder Regeltransistor ein bipolarer Transistor eingesetzt werden, dessen Kollektor-Emitterstrecke-Strecke zwischen dem Eingangsanschluß und dem Ausgangsanschluß der weiteren Schutzschaltung - bezogen auf Figur 1 am Knoten 9 - angeordnet ist und dessen Basis zur Zuführung der Basis-Steuerspannung über einen Widerstand mit der gemeinsamen Leitung verbunden ist.

Innerhalb der Sicherheitsbarriere kann als Spannungs- und Strombegrenzungseinrichtung jede beliebige derartige Einrichtung angeordnet sein, beispielsweise eine Zenerbarriere in bekannter oder anderer Ausführung, wie auch die Sicherungseinrichtung beliebig sein kann, zum Beispiel eine Schmelzsicherung. Soll die Sicherheitsbarriere für einen explosionsgefährdeten Bereich zum Einsatz gelangen, so ist in der Spannungs- und Strombegrenzungseinrichtung der Sicherheitsbarriere eine Schmelzsicherung zusammen gewöhnlich mit einer Zenerbarriere kombiniert.

Kurzbeschreibung der Zeichnung, in der zeigen:

Figur 1    ein Schaltbild einer Sicherheitsbarriere zur Überspannungsabschaltung bzw. -begrenzung zum Schutz der Spannungs- und Strombegrenzungseinrichtung wie des nachgeschalteten Verbrauchers

Figur 2    ein Schaltbild einer weiteren Sicherheitsbarriere mit stromfühlenden Widerstand vorzugsweise zur Überstromabschaltung bzw. - begrenzung zum Schutz der Spannungs- und Strombegrenzungseinrichtung oder andere zu schützende Schaltung oder des nach-geschalteten Verbrauchers

Figur 3    ein Schaltbild einer Sicherheitsbarriere mit der Kombination von Überstromabschaltung bzw. -begrenzung und Überspannungsabschaltung bzw. -begrenzung, wobei hier in der Gatezuleitung des Feldeffekttransistors zusätzlich eine Zenerdiode angeordnet ist

Figur 4    das Schaltbild der Sicherheitsbarriere nach Figur 3 mit nachgeschaltetem Verbraucher, wobei der Rückkopplungswiderstand nach der Sicherheitsbarriere angeschlossen ist

Figur 5    eine weitere technische Ausführung der Sicherheitsbarriere

Figur 6    Spannungsverläufe $U_{9,11}$ und $U_E$ beim Auslösen der Sicherheitsbarriere gemäß Figur 2 bei unterschiedlichen Werten des Rückkopplungswiderstandes und

Figur 7    Spannungsverläufe $U_{9,11}$ und $U_E$ beim Auslösen der Sicherheitsbarriere gemäß Figur 1 bei unterschiedlichen Werten des Rückkopplungswiderstandes.

Wege zur Ausführung der Erfindung:

Figur 1 zeigt ein Schaltbild einer Sicherheitsbarriere, die zur Spannungsdetektion dient und vorzugsweise eine Überspannungsabschaltung bzw.- begrenzung zum Schutz der Sicherheitsbarriere selbst sowie eines nachgeschalteten zu schützenden elektrischen Verbrauchers 15 darstellt. Die Sicherheitsbarriere, die prinzipiell in eine Zweidrahtleitung eingefügt sein kann, besitzt wenigstens zwei Eingangsanschlüsse 8, 10 und wenigstens zwei Ausgangsanschlüsse 16 und 17, wobei Eingangsanschluss 10 und Ausgangsanschluss 17 zu einer gemeinsamen Leitung 12 gehören, beispielsweise Masseleitung, bzw. zusammenfallen können. An die Ausgangsanschlüsse 16, 17 ist ein elektrischer Verbraucher 15 anschließbar.

Die gestrichelt umrandete Sicherheitsbarriere besteht prinzipiell aus einer in der Leitung 8-9-16 liegenden Sicherung F1, die vorzugsweise eine Schmelzsicherung ist, sowie einer von einem Knoten 18 der Leitung 8-9-16 auf die gemeinsame Leitung 12 bezogenen Spannungsbegrenzungseinrichtung, welche durch die Zenerdiode D3 symbolisiert ist; es können auch eine Mehrzahl von parallel geschalteten Dioden oder sonstige bekannte Barrieren, wie Zenerbarrieren, zur Anwendung gelangen. Nach dem Anschlußknoten 18 in der Leitung 8-9-16 der ersten Spannungsbegrenzungseinrichtung folgt eine Strombegrenzungseinrichtung, die in Reihe mit der Sicherung F1 liegt und durch den Widerstand R6 symbolisiert ist. Vorzugsweise kann der Sicherung F1 vor dem Anschlußknoten in der Leitung 8-9-16 der ersten Spannungsbegrenzungseinrichtung ein Widerstand R7 in Reihe geschaltet sein. Diese Spannungs-Strombegrenzungseinrichtung ist in Figur 1 voll umrandet mit der Bezugsziffer 14 bezeichnet.

Vor der Sicherung F1 ist eine weitere, zweite Schutzschaltung angeordnet, deren Bauelemente teilweise parallel den Eingangsanschlüssen 8, 10 und teilweise in Reihe mit der Sicherung F1 innerhalb der Leitung 8-9-16 oder auch 10-17 angeordnet sind und die ebenfalls eine Spannungs- und/oder Strombegrenzungsschaltung darstellt. Die Spannungs- und/oder Strombegrenzungsschaltung weist prinzipiell einen Feldeffekttransistor Q1 als Schalt- und/oder Regeltransistor auf, der als Längssteuerglied in den Figuren 1, 2 oder 3 als Schalt- und/oder Regeltransistor betrieben wird. Dazu liegt der Feldeffekttransistor Q1 mit seiner Source-Drain-Strecke längs zwischen dem Eingangsanschluß 8 und dem Knoten 9 und vor der Sicherung F1, wobei Source mit dem Eingangsanschluß 8 und Drain mit dem Knoten 9 verbunden ist. Das Gate G des Schalttransistors Q1 ist zur Zuführung der Steuerspannung über einen Widerstand R4 mit der gemeinsamen Leitung 12 verbunden.

Vor der Source-Gate-Strecke des Feldeffekttransistors Q1 ist ein zweiter Transistor Q2 angeordnet, dessen Ausgang, hier der Kollektor $Q2_3$, zur Beeinflussung der Steuerspannung des Feldeffekttransistors Q1 mit dem Gate G desselben verbunden ist. Der Emitter $Q2_1$ des Transistor Q2 ist mit dem Eingangsanschluß 8 verbunden. Die Spannung bzw. der Strom nach der Source-Drain-Strecke des Feldeffekttransistors Q1 ist über einen Rückkopplungswiderstand R3 am Knoten 9 auf die Basis $Q2_2$ des zweiten Transistors Q2 zu dessen Ansteuerung rückgekoppelt.

Zwischen der Basis $Q2_2$ des Transistors Q2 und der gemeinsamen Leitung 12 ist eine Zenerdiode D1 mit ihrer Anode auf die Leitung 12 geschaltet, wobei in Reihe mit der Zenerdiode D1 ein Widerstand R5 liegt, der optional sein kann. Auf der Seite der Source S des Feldeffekttransistors Q1 und der Basis von Q2 kann ein Widerstand R2 angeordnet sein, dessen Dimensionierung so gewählt ist, dass er zur Verringerung des notwendigen Rückkopplungsstromes über den Rückkopplungswiderstand R3 dient.

Die Auslösung dieser Spannungsbegrenzungs-Schutzschaltung erfolgt durch eine Überspannung direkt, wodurch der Strom in der nachgeschalteteten Spannungs- und Strombegrenzungseinrichtung D3, R6 mit vorzugsweise unzugänglicher Schmelzsicherung F1 gar nicht erst unzulässig ansteigen kann. Es wird somit die Abschaltung oder Rückregelung über die Zenrdiode D1 und den Widerstand R5 durch eine zu hohe Versorgungsspannung direkt eingeleitet. Die Einleitung der Abschaltung oder Rückregelung erfolgt somit ausschließlich über die Eingangspannung UE über den Eingängen 8, 10. Der Hauptvorteil liegt darin, dass der Spannungsabfall und somit die Verlustleistung der Schutzschaltung extrem klein gehalten werden kann. Zum Beispiel sind die folgenden Werte vorteilhaft: Bei RON = 0,2 Ohm und $J_a$ = 100mA ergibt sich ein $V_{Rest}$ = 20mV.

Figur 2 zeigt ein Schaltbild einer Sicherheitsbarriere, die zur Strombegrenzung dient und eine Stromabschaltung bzw. -begrenzung zum Schutz der Sicherheitsbarriere selbst sowie eines nachgeschalteten zu schützenden elektrischen Verbrauchers 15 darstellt. Mit dem Eingangsanschluß 8 ist ebenso ein Widerstand R1 verbunden, dessen anderes Ende mit Source S des Feldeffekttransistors Q1 verbunden ist. Dieser Widerstand R1 dient als Stromfühler zum Erkennen von unzulässig hohen Strömen. Ebenso kann zwischen R1 auf der Seite der Source S und der Basis von Q2 der Widerstand R2 vorhanden sein, der auch hier zur Verringerung des notwendigen Rückkopplungsstromes über den Rückkopplungswiderstand R3 dient.

Die Schaltung ist im Normalbetrieb so ausgelegt, dass der Feldeffekttransistor Q1 über den Widerstand R4 eine Steuerspannung von der Versorgungsspannung erhält und im EIN-Zustand gehalten ist, so dass der Drainstrom durch den Stromfühler-Widerstand R1 und den Schalttranssitor Q1 fließt. In diesem Zustand fließt nahezu keine Steuerstrom und somit auch kein Querstrom in das Gate, der den Meßwert des Stromes einer eventuellen Meßstrecke verfälschen könnte. Der stromfühlende Widerstand R1 steuert über den Widerstand R3 die Basis $Q2_2$ des Transistors Q2 an, der im Normalbetrieb gesperrt ist.

Steigt der Strom im Widerstand R1 auf einen Wert oberhalb der Steuerspannung UBE von Q2 an, z.B. auf 0,6 V, - zum Beispiel steigt bei Überspannung der Querstrom in der Spannungs- und Strombegrenzungs- einrichtung 7 an- wird zusätzlich über den Rückkopplungswiderstand R3 auf die Basis $Q2_2$ des Transistors Q2 eine entsprechend anwachsende UBE-Spannung rückgekoppelt, so dass der Transistor Q2 leitend wird. Dadurch sinkt die Steuerspannung des Gates G des Feldeffekttransistors Q1, so dass der Drainstrom abgeschaltet bzw. abgeregelt und damit der Ausgangsstrom der Schutzschaltung abgeschaltet bzw. abgeregelt wird und nicht weiter ansteigen kann (Konstantstrom). Damit stellt sich ein Kipp- oder Regelverhalten in Abhängigkeit von der Dimensionierung des Rückkopplungswiderstandes R3 ein, weshalb durch R3 die Eigenschaften der Schutzschaltung als Regler oder als Schalter eingestellt werden kann.

Im abgeschalteten Zustand der weiteren Schutzschaltung fließt ein geringer Haltestrom, nämlich Fühler- oder Reststrom, über den Rückkopplungswiderstand R3 und den Widerstand R2, so vorhanden, an die Ausgänge 9, 11. Da diese Widerstände R2 und R3 entsprechend groß ausgelegt werden können, kann dieser Reststrom leicht von der zu schützenden Elektronik aufgenommen werden, zum Beispiel durch ihre eigene Stromaufnahme oder von einer Zenerdiode.

Bei der Auslegung der weiteren Schutzschaltung gemäß Figur 2 ist zu beachten, dass eine Spannungs- und Strombegrenzungseinrichtung, zum Beispiel Zenerbarriere, eine spannungsabhängig Last darstellt, d. h. ein Überstrom wird unmittelbar durch eine Überspannung an der Spannungs- und Strombegrenzungseinrichtung verursacht und erst dadurch die Abschaltung der weiteren Schutzschaltung eingeleitet. Ein Kurzschluss nach der Sicherheitseinrichtung bzw. der Spannungs- und Strombegrenzungseinrichtung bzw. Zenerbarriere ist bei der Dimensionierung nicht zu berücksichtigen, weil die Sicherung F1 bei den bisherigen Auslegungen nicht auslösen darf. Der Abschaltstrom der weiteren Schutzschaltung wird ausschließlich zum Schutz der Sicherung F1 innerhalb der Spannungs- und Strombegrenzungseinrichtung 7, 13, 14 ausgelegt.

Darüber hinaus sind zusätzlich noch Auslegungen der Spannungs- und Strombegrenzungseinrichtung möglich, wie sie bisher im Stand der Technik vermieden wurden. Die Strombegrenzungschaltung bzw. der Widerstand R6 muss so dimensioniert werden, dass die nicht auswechselbare Sicherung F1 bei Kurzschluss am Ausgang nicht zerstört wurde. Da jetzt ein zusätzlicher Stromschutz für die Sicherung F1 vorgesehen ist, kann die Strombegrenzungschaltung bzw. der Widerstand R6 der Spannungs- und Strombegrenzungseinrichtung 7, 13, 14 ausschließlich nach EX-Bedingungen dimensioniert werden. So kann z.B. ein niedrigerer Widerstand R6 eine größere Ausgangsleistung als bisher zur Verfügung stellen, ohne dass gleichzeitig die Sicherung F1 und die Zenerdiode D3 oder mehrere derartiger Dioden innerhalb der Spannungs- und Strombegrenzungseinrichtung 7, 13, 14 verstärkt werden müssen, was eine größere abführbare Leistung im Normalbetrieb bedeutet. Insbesondere sind derartige verbesserte EX-Bedingungen vorteilhaft, wenn an die Sicherheitsbarriere eine insbesondere nichtlineare Last 15 angeschlossen ist.

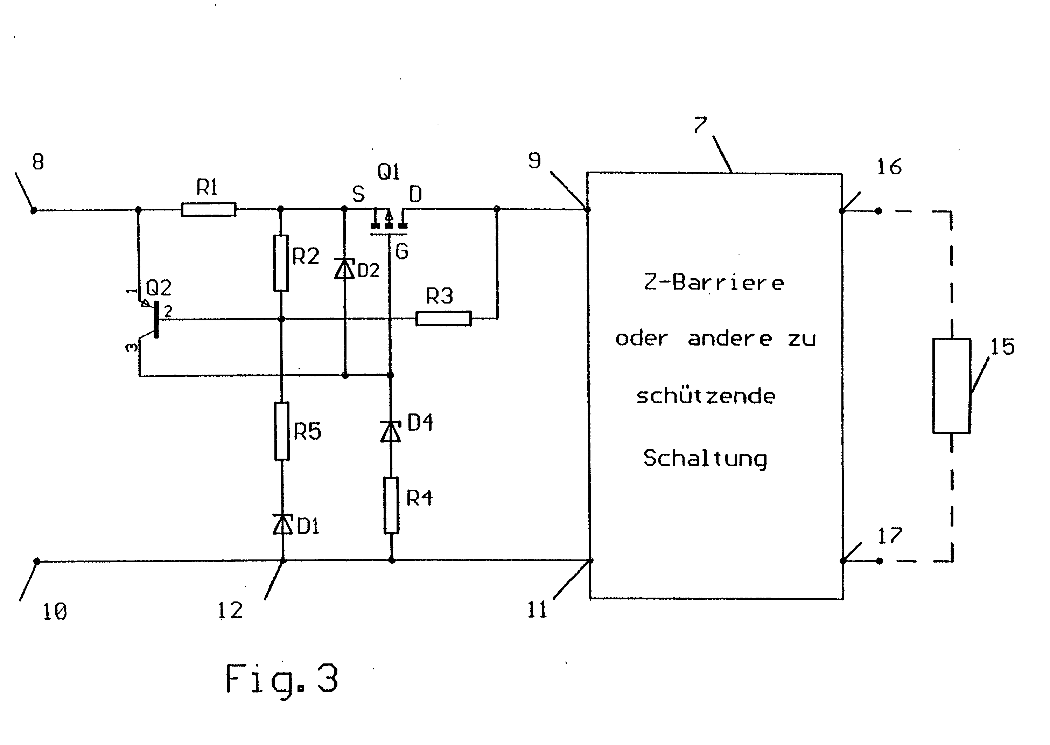

Figur 3 zeigt eine Sicherheitsbarriere in Kombination von Überstromabschaltung bzw. -begrenzung und Überspannungsabschaltung bzw. -begrenzung der Figuren 1 und 2 zum Schutz der Spannungs-Strombegrenzungseinrichtung 7 sowie der nachgeschalteten Last 15. Der stromfühlende Widerstand R1 und die Zenerdiode D1 der Figuren 1 und 2 sind vorhanden, so dass die Funktionen aus den Schaltungen der Figuren 1 und 2 zusammen vorhanden sind. Zusätzlich liegt hier in der Gatezuleitung des Feldeffekttransistors Q1 mit dem Widerstand R4 in Reihe eine Zenerdiode D4, die optional ist.

Des Weiteren ist in Figur 3 parallel zu Gate G und Source S des Feldeffekttransistors Q1 zwischen Gate und Source desselben zum Schutz der Gate-Source-Strecke G-S eine Zenerdiode D2 gelegt, die auch integraler Bestandteil des Feldeffekttransistors Q1 sein kann.

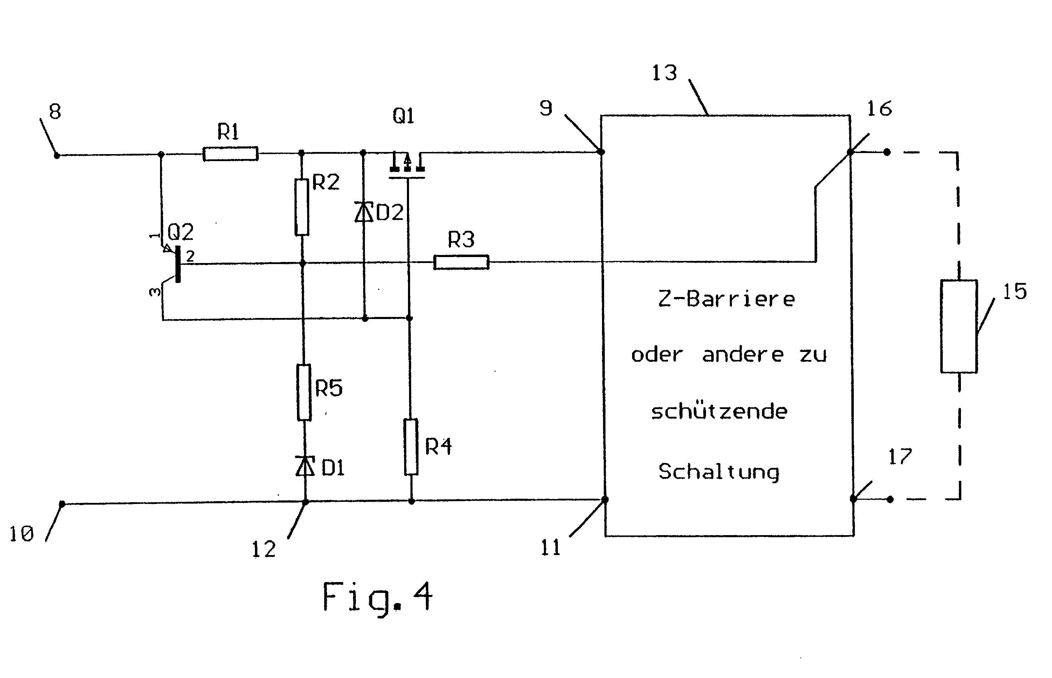

Figur 4 zeigt das Schaltbild der Sicherheitsbarriere gemäß Figur 3 zum Schutz der Spannungs- und Strombegrenzungseinrichtung 13 sowie der nachgeschalteten Last 15. Der Rückkopplungswiderstand R3 ist erst nach der Spannungs-und Strombegrenzungseinrichtung 13 an deren Ausgang 16 angeschlossen.

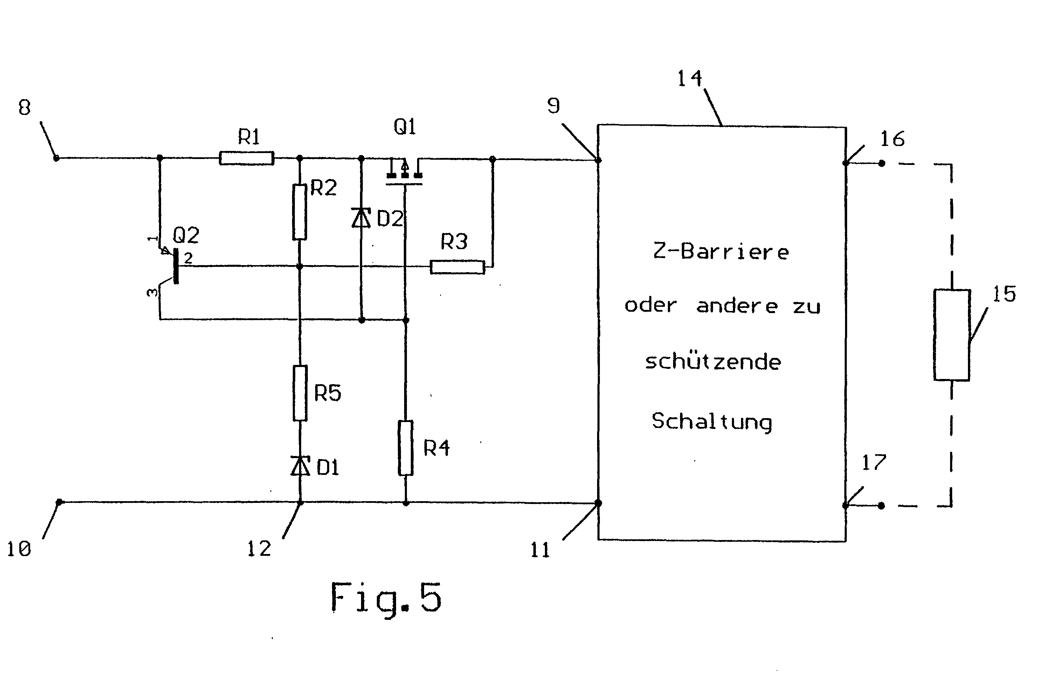

Figur 5 zeigt eine weitere technische Ausgestaltung der Schutzschaltung, wobei hier parallel zur Source-Gate-Strecke des Schalt- und/oder Regeltransistors Q1 die Diode D2 ohne der Diode D4 vorhanden ist, ansonsten aber die Schutzschaltung derjenigen in Figur 3 entspricht.

Zur Einstellung des Rückkoppelstromes kann, unabhängig von der Ausgangs- bzw. Versorgungsspannung, der Rückkopplungswiderstand R3 durch eine Steuer- oder Regelschaltung ersetzt werden, die auch eine Konstantstromschaltung sein kann.

Der Rückkopplungstrom kann mittels des Rückkopplungswiderstandes R3 oder der Steuer- oder Regelschaltung so eingestellt werden, dass sich bei Überlast ein Abregeln des Laststromes auf einen minimalen Wert ergibt und erst beim Anlegen einer Spannung größer als die Nennspannung ein Abschalten des Laststromes erfolgt und somit ein selbstständiges Wiedereinschalten beim anschliessenden Absenken der Versorgungspannung auf Nennspannung gegeben ist.

Damit die weitere Schaltung nach dem Ansprechen bzw. Auslösen wieder selbsttätig einschalten kann, müssen gewisse Dimensionierungsbedingungen für den Rückkopplungswiderstand R3 eingehalten werden. Die untere Grenze für die Dimensionierung des Widerstands R3 ist dadurch gegeben, dass der Spannungsabfall über den Widerstand R2 innerhalb des Spannungsteilers R2, R3 kleiner bleibt als UBE des Transistors Q2, der ansonsten öffnen würde. Die obere Grenze für die Dimensionierung des Rückkopplungswiderstandes R3 ist anwendungsspezifisch beliebig hoch, das heißt, dass der Rückkopplungswiderstand R3 gegen Unendlich gehen kann, wobei sich in diesem Fall ein Konstantstromverhalten einstellt.

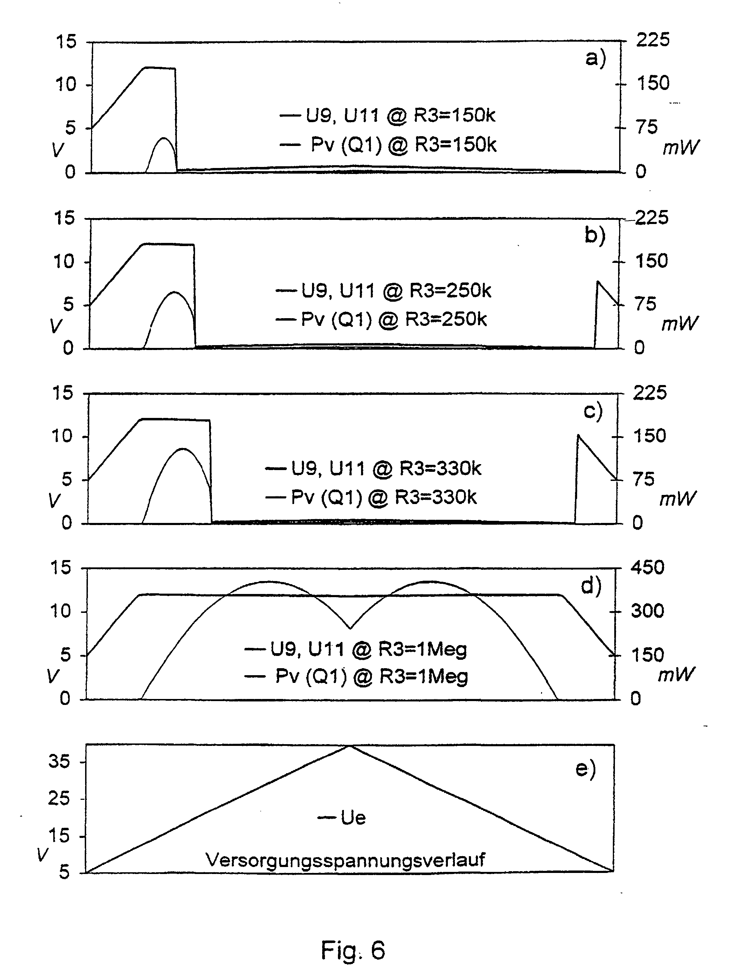

In der Figur 6 sind verschiedene Schaubilder a) bis e) dargestellt, wobei sich diese Figur 6 auf die Sicherheitsbarriere der Figur 2 bezieht. In den Schaubildern a) bis d) ist jeweils die Spannung U9-11 sowie die Verlustleistung über dem Eingangsspannungs- bzw. Versorgungsspannungsverlauf aufgetragen; Parameter ist ein veränderter Wert für den Rückkopplungswiderstand R3 bei einer bestimmten ausgewählten Dimensionierung der übrigen Bauelemente. Wird der Rückkopplungswiderstand R3 unter einen bestimmten Wert gewählt, so kann die weitere Schaltung nach Ansprechen nicht mehr selbsttätig einschalten, was hier beispielsweise bei einem Wert von R3 von 150 KΩ der Fall ist. Bei einem Wert von cirka 250 KΩ oder 330 KΩ schaltet die weitere Schaltung nach ihrem Ansprechen wieder selbsttätig ein, was in den Schaubildern b) und c) gezeigt ist. Wird der Widerstand R3 über eine bestimmte Grenze hinaus dimensioniert, so stellt sich in Folge der spannungsbegrenzenden Wirkung der Spannungs- und Strombegrenzungseinrichtung 7, 13, 14 eine konstante Ausgangsspannung ein, was im Schaubild d) gezeigt ist. Hier allerdings wächst die Verlustleistung der weiteren Schaltung überproportional an.

Figur 7 zeigt verschiedene, der Figur 6 ähnliche Schaubilder a) bis e), die sich auf die Sicherheitsbarriere der Figur 1 beziehen. Es sind die Spannungsverläufe $U_{9-11}$ sowie die Verlustleistungen über dem Eingangsspannungs- bzw. Versorgungsspannungsverlauf beim Auslösen der Sicherheitsbarriere bei unterschiedlichen Werten des Rückkopplungswiderstandes dargestellt. Bei kleinen Werten des Rückkopplungswiderstandes, zum Beispiel 150 kΩ bei ansonsten bestimmter ausgewählter Dimensionierung der übrigen Bauelemente, schaltet die Sicherheitsbarriere nach ihrer Auslösung, wenn die Spannung auf die Eingangsnennspannung $U_{ENEN}$ gesunken ist, nicht mehr ein. Bei größeren Werten hingegen, beispielsweise ab R3=250Ω, schaltet die Sicherheitsbarriere höchst vorteilhaft wieder selbsttätig ein, wenn die auslösende, gefährdende Spannung auf die Eingangsnennspannung $U_{ENEN}$ gesunken ist. Das ist auch bei sehr großen Werten von R3 der Fall. Aus den Schaubildern ist noch ersichtlich, dass tatsächlich die Verlustleistung der Sicherheitsbarriere in allen zu betrachtenden Fällen äußerst gering ist.

Nachstehend ist ein Beispiel für eine "grobe" Dimensionierung (Fein-Dimensionierung erfolgt mit Simulator Programm) der Widerstände R1, R2 und R3 zur Anpassung der Strombegrenzer-Kippstufe angegeben, wobei hier die Variante Abschalten betrachtet wird (nicht kippen):

$$U_{BEQ2} = (U_E \cdot (R_1 + R_2)) / (R_1 + R_2 + R_3) \Rightarrow R_3 = ((U_E / U_{BEQ2}) -1) \cdot (R_1 + R_2)$$

Definiert $I_{max}$ in $Q_1$ = 50 mA

$$R_1 = 0.5V^* / 50mA = 10\ \Omega \qquad ^*U_{BEQ2}\ \text{mit 0.5 V angenommen}$$

Für ein gewünschtes Wieder-Einschalten wird der Kurzschluß-Strom für Nominal-Eingangsspannung $U_{ENEN}$ auf ca. 10% von $I_{max}$ festgelegt:

$$U_{R1} = 10\ \Omega \bullet 5\ mA = 50\ mV$$

$$U_{R2} = 0.5\ V - 0.05\ V = 0.45\ V$$

Definition des Querstroms durch $R_3 \approx R_2 = 30\ \mu A$

$$R_2 = 0.45\ V / 30\ \mu A = 15\ k\Omega$$

$$R_3 = ((U_E/U_{BEQ2})-1)\bullet(R_1 + R_2) = (8V^{**}/0.5\ V - 1)\cdot(10\ \Omega + 15\ k\Omega) = \underline{225\ k\Omega}$$

** angenommmen f. Ex

Gewerbliche Anwendbarkeit:

Der Gegenstand der Erfindung ist als Sicherheitsbarriere, insbesondere für explosionsgeschützte Räume, gewerblich anwendbar sowie die weitere Schutzschaltung auch überall dort, wo ein elektrisches Gerät vor einer Überspannung oder einem Überstrom geschützt werden soll. Die weitere Schutzschaltung allein kann vorteilhaft auch als elektrische bzw. elektronische Vorschaltsicherung eingesetzt werden, indem sie beim Auftreten von Überspannungen oder Überströmen nachgeschaltete elektrische Geräte vor unzulässigen Spannungen und Strömen schützt; die angeschlossenen Geräte werden somit auch beim versehentlichen Anschließen an zu große Versorgungsspannungen nicht beschädigt.

Liste der Bezugzeichen:

| | |
|---|---|
| Q1 | Feldeffekttransistor |
| Q2 | Transistor |
| Q21 | Emitter des Transistors Q2 |
| Q22 | Basis des Transistors Q2 |
| Q23 | Kollektor des Transistors Q2 |
| R1, R2, R3, R4, R5, R6, R7 | Widerstände |
| D1, D2, D3, D4 | Dioden |
| F1 | Schmelzsicherung |
| 7, 13, 14 | Spannungs- und Strombegrenzungseinrichtung, zum Beispiel Zenerbarriere |
| 8, 10 | Eingangsanschlüsse der Sicherheitsbarriere |
| 9, 11 | Ausgänge bzw. Knoten der weiteren Schutzschaltung |
| 12 | gemeinsame Leitung, wie Masseleitung |
| 15 | Verbraucher bzw. Last |
| 16, 17 | Ausgangsanschlüsse der Sicherheitsbarriere |
| 18 | Knoten |
| D | Drain von Q1 |
| S | Source von Q1 |
| G | Gate von Q1 |
| $U_E$ | Eingangsspannung |
| $U_A$ | Ausgangsspannung |
| $U_{ENEN}$ | Eingangsnennspannung |

**Patentansprüche**

1. Sicherheitsbarriere (19) zum Begrenzen von Strom und Spannung eines der Sicherheitsbarrier (19) nachgeschalteten elektrischen Verbrauchers (15), zum Beispiel Meßwertgeber, mit mindestens einem Eingangsanschluß (8) und einem Ausgangsanschluß (16) sowie Eingangs- und Ausgangsanschluß (10,17) einer gemeinsamen Leitung (12), beispielsweise Masseleitung, wobei die Sicherheitsbarriere (19) wenigstens eine Spannungs- und Strombegrenzungseinrichtung (7,13,14), wie Zenerbarriere, aufweist, umfassend wenigstens eine Sicherungseinrichtung (F1), wie Schmelzsicherung, eine auf die gemeinsame Leitung (12) bezogene Spannungsbegrenzungseinrichtung (D3), eine mit dem Ausgang derselben verbundene Strombegrenzungseinrichtung (R6) sowie eine weitere Schutzschaltung (20), welche vor der Spannungs- und Strombegrenzungseinrichtung (7,13,14) angeordnet ist, **dadurch gekennzeichnet dass**
die weitere Schutzschaltung (20) einen Feldeffekttransistor (Q1) als Schaltund/oder Regeltransistor aufweist, dessen Source-Drain-Strecke (S-D) zwischen dem Eingangsanschluß (8) und der Spannungs- und Strombegrenzungseinrichtung (7,13,14) angeordnet ist und das Gate (G) zur Zuführung der Steuerspannung des Feldeffekttransistors (Q1) über einen Widerstand (R4) mit der gemeinsamen Leitung (12) verbunden ist, wobei an den Eingangsanschluß (8) und an das Gate (G) des Schalt- und/oder Regeltransistors (Q1) ein zweiter Transistor (Q2) angeschlossen ist, dessen Kollektor ($Q2_3$) zur Beeinflussung der Steuerspannung des Schalt- und/ oder Regeltransistors (Q1) mit dem Gate (G) desselben verbunden ist, und die Spannung ($U_{9,11}$) nach dem Schalt- und/oder Regeltransistor (Q1) nach dessen Drain (D) zwischen den Ausgängen (9,11) der weiteren Schutzschaltung (20) über einen Rückkopplungswiderstand (R3) auf die Basis ($Q2_2$) des zweiten Transistors (Q2) rückgekoppelt ist, wobei zur Spannungsdetektion zwischen der Basis ($Q2_2$) des zweiten Transistors (Q2) und der gemeinsamen Leitung (12) eine Spannungsfühlerschaltung (D1,R5) angeordnet ist
oder
zur Stromerfassung zwischen den Eingangsanschluß (8) und der Source (S) des Schalt- und/oder Regeltransistors (Q1) ein Längswiderstand (R1) als Stromfühler angeordnet ist.

2. Sicherheitsbarriere nach Anspruch 1, **dadurch gekennzeichnet,**
**dass** betreffend die weitere Schutzschaltung gleichzeitig sowohl zur Spannungsdetektion als auch zur Strombegrenzung der Längswiderstand (R1 als Stromfühler und die Spannungsfühlerschaltung (D1,R5) als Spannungsdetektor vorhanden sind.

3. Sicherheitsbarriere nach Anspruch 1 oder 2, **dadurch gekennzeichnet,**
**dass** die Spannungsfühlerschaltung (D1,R5) eine Zener- oder Diacdiode (D1) und einen Widerstand (R5) in Reihe geschaltet umfasst.

4. Sicherheitsbarriere nach Anspruch 1, **dadurch gekennzeichnet,**
**dass** der Rückkopplungstrom mittels des Rückkopplungswiderstandes (R3) oder der Steuer- oder Regelschaltung so eingestellt ist, dass sich bei Überlast ein Abregeln des Laststromes auf einen minimalen Wert ergibt und erst beim Anlegen einer Spannung ($U_{8-10}$) größer als die Eingangsnennspannung ($U_{EN}$) ein Abschalten des Stromes in die Spannungs- und Strombegrenzungseinrichtung (7,13,14) erfolgt und ein selbstständiges Wiedereinschalten beim anschliessenden Absenken der Versorgungsspannung ($U_E$) auf Eingangsnennspannung ($U_{EN}$) gegeben ist.

5. Sicherheitsbarriere nach Anspruch 1, **dadurch gekennzeichnet,**
**dass** zur Verringerung des Rückkopplungsstromes in der weiteren Schutzschaltung ein Widerstand (R2) zwischen die Basis ($Q2_2$) des Transistors (Q2) und Source (S) des Schalt- und Regeltransistors (Q1) gelegt ist.

6. Sicherheitsbarriere nach einem der vorstehenden Ansprüche, **dadurch gekennzeichnet,**
**dass** die Bezugsspannung bzw. Rückkopplungsspannung ($U_{9-11}; U_A$) des Rückkopplungswiderstandes (R3) sowohl direkt nach dem Drain (D) des Schalt- und/oder Regeltransistors (Q1) als auch an jedem beliebigen Schaltungspunkt des Stromweges zwischen den Leitungspunkten 9 und 16 abgreifbar und auf die Basis ($Q2_2$) des zweiten Transistors (Q2) rückgekoppelt ist.

7. Sicherheitsbarriere nach einem der vorherigen Ansprüche, **dadurch gekennzeichnet, dass** parallel zu Gate (G) und Source (S) des Schalt- und/oder Regeltransistors (Q1) zwischen Gate (G) und Source (S) desselben eine Zenerdiode (D2) zum Schutz der Gate-Source-Strecke (G-S) gelegt ist.

**8.** Sicherheitsbarriere nach einem der vorherigen Ansprüche, **dadurch gekennzeichnet, dass** zur Verringerung der Gate-Ansteuerspannung des Schalt- und/oder Regeltransistors (Q1) eine Zenerdiode (D4) in Reihe mit dem Widerstand (R4) geschaltet ist.

**9.** Sicherheitsbarriere nach Anspruch 7 und/oder 8, **dadurch gekennzeichnet, dass** die Zenerdioden D2 und/oder D4 integrale Bestandteile des Schalt- und/oder Regeltransistors (Q1) sind.

**10.** Sicherheitsbarriere nach Anspruch 1, **dadurch gekennzeichnet, dass** zur Einstellung des Rückkoppelstromes unabhängig von der Ausgangs- bzw. Versorgungsspannung der Rückkopplungswiderstand (R3) durch eine Steuer- oder Regelschaltung ersetzt ist.

**11.** Sicherheitsbarriere nach Anspruch 10, **dadurch gekennzeichnet, dass** die Steuer- oder Regelschaltung eine Konstantstromschaltung ist.

**12.** Sicherheitsbarriere nach einem der vorherigen Ansprüche, **dadurch gekennzeichnet, dass** dieselbe eine Reset-Einrichtung, zum Beispiel Taste, zum Wiedereinschalten der weiteren Schutzschaltung nach Auslösung der Abschaltung des Stromes in die Spannungs- und Strombegrenzungseinrichtung (7,13,14) aufweist.

**13.** Sicherheitsbarriere nach Anspruch 1, dadurch gekennzeichent, dass der zweite Transistor (Q2) ein elektronisches Relais oder Feldeffekttransistor oder Thyristor ist.

**14.** Sicherheitsbarriere nach Anspruch 1, **dadurch gekennzeichnet, dass** statt des Feldeffekttransistors ein bipolarer Transistor oder elektronisches Relais eingesetzt ist.

## Claims

**1.** A safety barrier (19) for limiting the current and voltage of an electric consumer (15), for example, a transducer, connected after the safety barrier (19), said safety barrier (19) having at least one input connection (8) and one output connection (16) as well as input and output connections (10, 17) of a shared line (12), for example, a ground conductor, whereby the safety barrier (19) has at least one voltage and current limiter (7, 13, 14), such as a Zener barrier, comprising at least one fuse (F1), such as a blow-out fuse, a voltage limiter (D3) linked to the shared line (12), a current limiter (R6) connected to the output of said voltage limiter (D3) as well as an additional protective circuit (20), which is arranged before the voltage and current limiter (7, 13, 14), **characterized in that** the additional protective circuit (20) has a field transistor (Q1) as the switching and/or regulating transistor whose source-drain link (S-D) is arranged between the input connection (8) and the voltage and current limiter (7, 13, 14), and the gate (G) for feeding the control voltage of the field transistor (Q1) is connected via a resistor (R4) to the shared line (12), whereby a second transistor (Q2) is connected to the input connection (8) and to the gate (G) of the switching and/or regulating transistor (Q1), whereby the collector ($Q2_3$) of the second transistor (Q2), in order to influence the control voltage of the switching and/or regulating transistor (Q1), is connected to the gate (G) thereof, and the voltage ($U_{9,11}$) after the switching and/or regulating transistor (Q1) after its drain (D) is fed back between the outputs (9, 11) of the additional protective circuit (20) via the feedback resistor (R3) to the base ($Q2_2$) of the second transistor (Q2), whereby for purposes of voltage detection, there is a voltage sensing circuit (D1, R5) arranged between the base ($Q2_2$) of the second transistor (Q2) and the shared line (12) or for purposes of current detection, there is a series resistor (R1) arranged between the input connection (8) and the source (S) of the switching and/or regulating transistor (Q1) as a current sensor.

**2.** The safety barrier according to Claim 1, **characterized in that**, pertaining to the additional protective circuit, concurrently for voltage detection as well as for current limitation, the series resistor (R1) is present in the form of a current sensor and the voltage sensing circuit (D1, R5) is present in the form of a voltage detector.

**3.** The safety barrier according to Claim 1 or 2, **characterized in that** the voltage sensing circuit (D1, R5) comprises a Zener or trigger diode (D1) and a resistor (R5), which are connected in series.

4. The safety barrier according to Claim 1, **characterized in that**
the feedback current is set by means of the feedback resistor (R3) or by means of the switching or regulating circuit in such a way that, in case of overload, the load current is cut back to a minimum value and only after the application of a voltage ($U_{8-10}$) that is greater than the rated input voltage ($U_{EN}$) is the current switched off in the voltage and current limiter (7, 13, 14) and autonomously switched back on at the time of the subsequent lowering of the supply voltage ($U_E$) to the rated input voltage ($U_{EN}$).

5. The safety barrier according to Claim 1, **characterized in that**,
in order to reduce the feedback current in the additional protective circuit, a resistor (R2) is installed between the base ($Q2_2$) of the transistor (Q2) and the source (S) of the switching and regulating transistor (Q1).

6. The safety barrier according to one of the preceding claims, **characterized in that**
the reference voltage or feedback voltage ($U_{9-11}; U_A$) of the feedback resistor (R3) can be tapped directly after the drain (D) of the switching and/or regulating transistor (Q1) as well as at any desired circuit point of the current path between the line points 9 and 16, and is fed back to the base ($Q2_2$) of the second transistor (Q2).

7. The safety barrier according to one of the preceding claims, **characterized in that**,
parallel to the gate (G) and the source (S) of the switching and/or regulating transistor (Q1), a Zener diode (D2) is applied between said gate (G) and the source (S) in order to protect the gate-source link (G-S).

8. The safety barrier according to one of the preceding claims, **characterized in that**,
in order to reduce the gate drive voltage of the switching and/or regulating transistor (Q1), a Zener diode (D4) is connected in series with the resistor (R4).

9. The safety barrier according to Claim 7 and/or 8, **characterized in that**
the Zener diodes D2 and/or D4 are integral components of the switching and/or regulating transistor (Q1).

10. The safety barrier according to Claim 1, **characterized in that**,
in order to set the feedback current, irrespective of the output or supply voltage, the feedback resistor (R3) is replaced by a switching or regulating circuit.

11. The safety barrier according to Claim 10, **characterized in that**
the switching or regulating circuit is a constant current circuit.

12. The safety barrier according to one of the preceding claims, **characterized in that**
said safety barrier has a reset means, for example, a button, for switching the additional protective circuit back on after the current has been switched off in the voltage and current limiter (7, 13, 14).

13. The safety barrier according to Claim 1, **characterized in that**
the second transistor (Q2) is an electronic relay or field effect transistor or thyristor.

14. The safety barrier according to Claim 1, **characterized in that**
a bipolar transistor or electronic relay is used instead of the field effect transistor.

**Revendications**

1. Barrière de sécurité (19) destinée à limiter le courant et la tension d'un consommateur de courant (15) monté en aval de la barrière de sécurité, par exemple un capteur de mesure, présentant au moins une connexion d'entrée (8) et une connexion de sortie (16), ainsi qu'une connexion d'entrée et de sortie (10, 17) d'une ligne commune (12), par exemple une ligne de masse, la barrière de sécurité (19) présentant au moins un organe de limitation de tension et de courant (7, 13, 14), tel qu'une barrière de Zener comprenant au moins un dispositif de protection (F1) tel qu'un coupe-circuit fusible, un organe de limitation de la tension (D3) se rapportant à la ligne commune (12), un organe de limitation du courant (R6) relié à la sortie de celui-ci, ainsi qu'un circuit de protection supplémentaire (20) disposé en amont de l'organe de limitation de tension et de courant (7,13,14), **caractérisée en ce que** le circuit de protection supplémentaire (20) présente un transistor à effet de champ (Q1) en tant que transistor de commutation et/ou de réglage dont le parcours source-drain (S-D) est disposé entre la connexion d'entrée (8) et l'organe de limitation de tension et de courant (7, 13, 14), la grille (G) pour l'amenée de la tension de commande du transistor à effet de champ (Q1) étant reliée à la ligne commune (12) via une résistance (R4), un deuxième transistor (Q2) étant raccordé à la connexion d'entrée (8) et à la grille (G) du transistor de commutation et/ou de réglage (Q1), dont le collecteur (Q2$_3$) est relié à la grille (G) du transistor de commutation et/ou de réglage (Q1) pour influer sur la tension de commande de ce dernier, et la tension (U$_{9,11}$) en aval du transistor de commutation et/ou de réglage (Q1), derrière le drain (D) de celui-ci entre les sorties (9, 11) du circuit de protection supplémentaire (20) étant réappliquée sur la base (Q2$_2$) du deuxième transistor (Q2) via une résistance de réaction (R3), un circuit de palpage de tension (D1, R5) étant disposé entre la base (Q2$_2$) du deuxième transistor (Q2) et la ligne commune (12) pour détecter la tension,
ou
une résistance longitudinale (R1) servant de détecteur de courant étant disposée entre la connexion d'entrée (8) et la source (S) du transistor de commutation et/ou de réglage (Q1) pour détecter le courant.

2. Barrière de sécurité selon la revendication 1, **caractérisée en ce que**,
en ce qui concerne le circuit de protection supplémentaire, la résistance longitudinale (R1) faisant office de détecteur de courant et le circuit de palpage de tension (D1, R5) faisant office de détecteur de tension, sont présents simultanément aux fins de la détection de la tension et de la limitation du courant.

3. Barrière de sécurité selon l'une quelconque des revendications 1 ou 2,
**caractérisée en ce que**
le circuit de palpage de tension (D1, R5) comprend une diode Zener ou un diac (D1) et une résistance (R5) montées en série.

4. Barrière de sécurité selon la revendication 1, **caractérisée en ce que**
le courant de réaction est réglé au moyen de la résistance de réaction (R3) ou du circuit de commande ou de réglage de sorte que, en présence d'une surcharge, le courant de charge est réduit à une valeur minimale et que le courant dans l'organe de limitation de tension et de courant (7, 13, 14) n'est coupé que lorsqu'une tension (U$_{8-10}$) supérieure à la tension d'entrée nominale (U$_{EN}$) est appliquée et que le courant se réenclenche ensuite automatiquement lorsque la tension d'alimentation (U$_E$) est tombée à la tension nominale d'entrée (U$_{EN}$).

5. Barrière de sécurité selon la revendication 1, **caractérisée en ce que**,
pour réduire le courant de réaction dans le circuit de protection supplémentaire, une résistance (R2) est disposée entre la base (Q22) du transistor (Q2) et la source (S) du transistor de commutation et de réglage (Q1).

6. Barrière de sécurité selon l'une quelconque des revendications précédentes, **caractérisée en ce que**
la tension de référence ou tension de réaction (U$_{9-11}$; Ua) de la résistance de réaction (R3) peut être prélevée soit directement après le drain (D) du transistor de commutation et/ou de réglage (Q1) soit à n'importe quel point de circuit du trajet du courant entre les points de ligne 9 et 16 et est réappliquée à la base (Q2$_2$) du deuxième transistor.

7. Barrière de sécurité selon l'une quelconque des revendication précédentes, **caractérisée en ce que**,
parallèlement à la grille (G) et la source (S) du transistor de commutation et/ou de réglage (Q1), entre la grille (G) et la source (S) de ce dernier, une diode Zener (D2) est montée pour protéger le parcours grille-source (G-S).

8. Barrière de sécurité selon l'une quelconque des revendications précédentes, **caractérisée en ce que**,
pour réduire la tension d'excitation de la grille du transistor de commutation et/ou de réglage (Q1), une diode Zener (D4) est montée en série avec la résistance (R4).

9. Barrière de sécurité selon la revendication 7 et/ou la revendication 8,
**caractérisée en ce que** les diodes Zener D2 et/ou D4 font partie intégrale du transistor de commutation et/ou de réglage (Q1).

10. Barrière de sécurité selon la revendication 1, **caractérisée en ce que**,
pour régler le courant de réaction indépendamment de la tension de sortie ou de la tension d'alimentation, la résistance de réaction (R3) est remplacée par un circuit de commande ou de réglage.

11. Barrière de sécurité selon la revendication 10, **caractérisée en ce que**
le circuit de commande ou de réglage est un circuit à courant constant.

**12.** Barrière de sécurité selon l'une quelconque des revendications précédentes, **caractérisée en ce que** celle-ci présente un dispositif de remise à zéro, par exemple une touche, pour réarmer le circuit de protection supplémentaire après déclenchement de la coupure du courant dans l'organe de limitation de tension et de courant (7,13,14).

**13.** Barrière de sécurité selon la revendication 1, **caractérisée en ce que** le deuxième transistor (Q2) est un relais électronique ou un transistor à effet de champ ou un thyristor.

**14.** Barrière de sécurité selon la revendication 1, **caractérisée en ce que**, au lieu du transistor à effet de champs, l'on fait appel à un transistor bipolaire ou à un relais électronique.

Fig.1

EP 1 166 420 B1

Fig.2

Fig. 3

EP 1 166 420 B1

Z-Barriere
oder andere zu
schützende
Schaltung

Fig. 4

EP 1 166 420 B1

R1  Q1

R2

Q2

D2

R3

R5

D1  R4

8

9

14

16

15

Z-Barriere

oder andere zu

schützende

Schaltung

17

10

12

11

## Fig.5

Fig. 6

Fig. 7